# EUROPEAN PATENT APPLICATION

(11) **EP 1 791 017 A1**
(43) Date of publication of application: **30.05.2007**
(21) Application number: 06256009.9
(22) Date of filing: 23.11.2006
(51) Int. Cl.: G02F 1/13, H04M 1/02

(54) **Display cover provided with a window and mobile telephone using it**

(30) Priority: 23.11.2005 KR 20050112590
(71) Applicant: Samsung SDI Co., Ltd., Suwon-si, Gyeonggi-do (KR)
(72) Inventor: Jang, Jin Seok, Legal & IP Team, Yongin-si Gyeonggi-do (KR); Kim, Tae Soo Legal & IP Team, Yongin-si Gyeonggi-do (KR); Jung, Jae Ho, Legal & IP Team, Yongin-si Gyeonggi-do (KR); Kim, Yong Seok, Legal & IP Team, Yongin-si Gyeonggi-do (KR); Song, Hyo Shin, Legal & IP Team, Yongin-si Gyeonggi-do (KR); Lim, Hwan Soo, Legal & IP Team, Yongin-si Gyeonggi-do (KR)
(74) Representative: Mounteney, Simon James

(57) **Abstract**

A display window assembly which can be easily manufactured with increased yield has a reduced thickness. The display window assembly (300) may be employed with portable electronic devices such as mobile telephones. The display window assembly (300) includes a case (310) including an engaging portion (312) and a predetermined opening (302), the predetermined opening may be at least partially defined by opposing surfaces (311a,311b) of the case (310) and the engaging portion (312) may protrude from at least one of the opposing surfaces (311a,311b) of the case, a transparent member (330) having a first surface (331) and a second surface (333), a display device (350), a connecting mechanism (390) arranged between the second surface (333) of the transparent member and a first surface (351) of the display device, the connecting mechanism (which can be an adhesive tape) attaching the transparent member (330) to the display device (350), and a backlight unit (BLU; 370) arranged on a second surface (373) of the display device, opposite to the first surface (351), to project light onto the display device.

## Description

### BACKGROUND OF THE INVENTION

### 1. Field of the Invention

The present invention relates to display window assemblies and portable electronic device cases including such display window assemblies. More particularly, the invention relates to display window assemblies and portable electronic device cases, e.g., mobile phone cases, including such display window assemblies, which may be relatively thinner than known display window assemblies, be easily assembled and have sufficient adhesion and/or connection space, and to portable electronic devices employing such cases enabling a relatively higher production yield, improved impact resistance.

### 2. Discussion of Related Art

Various electronic devices, including portable communication devices, e.g., cellular phones, PDAs, may include a display, e.g., liquid crystal display (LCD) for displaying images.

Such electronic devices may include a case in which the display may be housed and isolated from the outside. To enable viewing of images on the display, e.g., LCD, the case may include a window assembly portion, and the display may be arranged behind the window in the window assembly portion of the display.

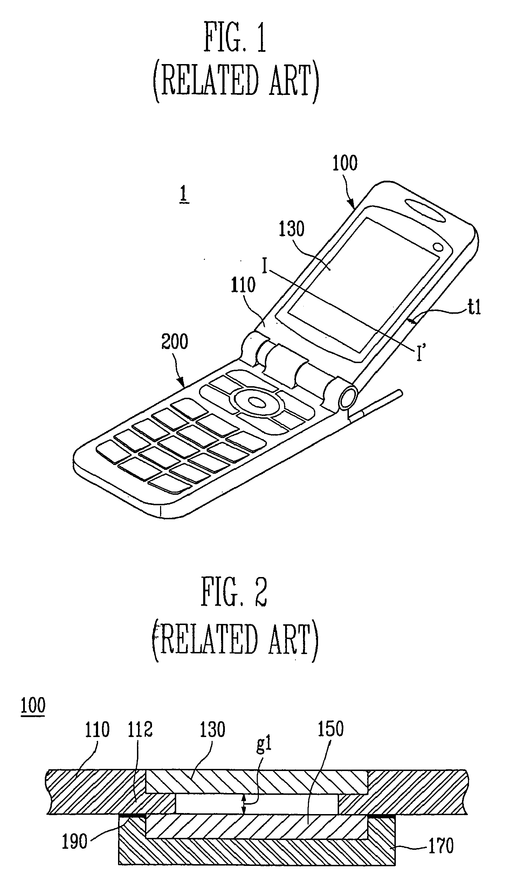

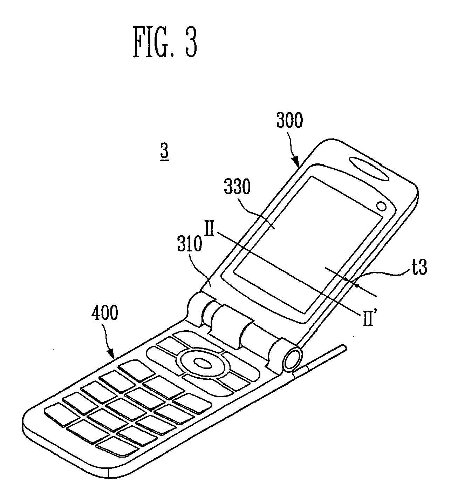

FIG. 1 illustrates a general perspective view of a mobile phone, and FIG. 2 illustrates a cross-sectional view of the window assembly portion of the mobile phone illustrated in FIG. 1.

As illustrated in FIG. 1, a mobile phone 1 may generally include a display portion 100 for displaying and/or entering information, e.g., images, an input portion 200 for inputting information, e.g., display signals to the display portion 100, communication signals, etc., a window 130 for viewing the display, a case 110 for supporting components of the display portion 100, and a control unit (not shown) for controlling the information, e.g., input to the input unit 200, the display signals of the display portion 100 and communication signals, etc.

As illustrated in FIG. 2, the display portion 100 of the mobile phone 1 may include the case 110, the window 130, a display device 150 arranged inside the case 110, and a backlight unit 170 (so-called "BLU") arranged behind the display device 150. The BLU 170 may be secured to the case 110, e.g., using a tape 190.

The case 110 may be a member corresponding to a general outer structure and/or appearance of the mobile phone 1. The case 110 may include a predetermined opening exposing at least a portion of the window 130 and the display device 150 to allow images displayed on the display device 150 to be viewed from outside of the case 110. The case 110 may include a protruding portion 112 on which the window 130 may be arranged. The protruding portion 112 may protrude inward along edges of the predetermined opening. The window 130 may be arranged on the protruding portion 112 of the case 110, and may be designed to protect a display device 150, arranged inside of the case 110, from environmental factors.

The display device 150 may display information, e.g., signals for operating the mobile phone 1. For example, when a call is received, the display device 150 may signal a change in the color being displayed or may display an image to inform the user of the received call.

Although not illustrated in FIG. 1, the case 110 may have opposing sides, and the BLU 170 may be arranged between opposing sides of the case 110. As illustrated in FIG. 2, the BLU 170 may receive the display device 150. When the BLU 170, with the display device 150, is attached to the case 110, a portion of the display device 150 may be sandwiched between the protruding portions 112 of the case 110 and the BLU 170.

The protruding portions 112 may be sandwiched between the window 130 and the display device 150. A gap g1 may exist between the window 130 and the display device 150. The gap g1 is a significant factor in a thickness t1 of the display portion 100 of the mobile phone 1.

The demand for smaller and thinner portable communication devices is increasing. For example, in the mobile phone 1 described above, such a demand may be satisfied by reducing the gap g1 between the window 120 and the display device 150, and reducing a thickness of the mobile phone 1.

However, simply reducing the gap g1 of the mobile phone 1 does not come without tradeoffs. As the sizes of portable electronic devices have already decreased, such tradeoffs may complicate fabrication processes, reduce yield, reduce impact resistance, increase cost, etc. For example, in the case of mobile phone 1 described above, a reduction in the gap g1reduces an impact resistance of the mobile phone 1 against, e.g., externally applied impacts. Reducing the gap g1 may also complicate the fabrication process because the protruding portions 112 may be eliminated and the BLU 170 may directly contact the inside of the case 110, which may complicate securing of the display device 150 to the case 110. Further, if the display device 150 is not sufficiently secured and/or process(es) for assembling the display portion 100 become complicated, production yield of the mobile phone 1 may be reduced.

### SUMMARY OF THE INVENTION

The present invention is therefore directed to a display window assembly and a portable electronic device cases including a display window assembly that set out to address one or more of the problems of the related art.

Accordingly, a first aspect of the invention provides a display window assembly as set out in claim 1. Preferred features are set out in claims 2 to 19.

A second aspect of the invention is set out in claim 20. A preferred feature is set out in claims 21.

### BRIEF DESCRIPTION OF THE DRAWINGS

The above and other features and advantages of the present invention will become more apparent to those of ordinary skill in the art by describing in detail exemplary embodiments thereof with reference to the attached drawings, in which:

FIG. 1 illustrates a perspective view of a mobile phone;

FIG. 2 illustrates a cross-sectional view of a display window assembly portion taken along line I-I in the mobile phone illustrated in FIG. 1;

FIG. 3 illustrates a perspective view of an exemplary portable electronic device including a display window assembly according to an embodiment of the present invention;

FIG. 4A illustrates a cross-sectional view of a first embodiment of a display window assembly according to the invention taken along line II-II in a portable electronic device, such as the mobile phone illustrated in FIG. 3;

FIG. 4B illustrates a cross-sectional view of a second embodiment of a display window assembly according to the invention taken along line II-II in a portable electronic device, such as the mobile phone illustrated in FIG. 3;

FIG. 4C illustrates a top plan view of a first embodiment of an engaging portion of the present invention;

FIG. 4D illustrates a top plan view of a second embodiment of an engaging portion of the present invention;

FIG. 5A illustrates a top plan view of a first embodiment of a connecting mechanism employable with a display window assembly of the present invention;

FIG. 5B illustrates a top plan view of a second embodiment of a connecting mechanism employable with a display window assembly of the present invention;

FIG. 6A illustrates a cross-sectional view of a third embodiment of a display window assembly taken along line II-II in a portable electronic device, such as the mobile phone, illustrated in FIG. 3;

FIG. 6B illustrates a cross-sectional view of a fourth embodiment of a display window assembly taken along line II-II in a portable electronic device, such as the mobile phone, illustrated in FIG. 3;

FIG. 6C illustrates a cross-sectional view of a fifth embodiment of a display window assembly taken along line II-II in a portable electronic device, such as the mobile phone, illustrated in FIG. 3;

FIG. 6D illustrates a cross-sectional view of a sixth embodiment of a display window assembly taken along line II-II in a portable electronic device, such as a mobile phone, illustrated in FIG. 3;

FIG. 7A illustrates a cross-sectional view of an alternate embodiment of the display window assembly illustrated in FIG. 4A, with a third embodiment of a connecting mechanism;

FIG. 7B illustrates a cross-sectional view of an alternate embodiment of the display window assembly illustrated in FIG. 6A, with the third embodiment of the connecting mechanism; and

FIG. 7C illustrates a cross-sectional view of an alternate embodiment of the display window assembly illustrated in FIG. 6C, with the third embodiment of the connecting mechanism.

### DETAILED DESCRIPTION OF THE INVENTION

Embodiments of the present invention will now be described more fully hereinafter with reference to the accompanying drawings. The invention may, however, be embodied in different forms and should not be construed as limited to the embodiments set forth herein. Rather, these embodiments are provided so that this disclosure will be thorough and complete, and will fully convey the scope of the invention to those skilled in the art. In the figures, the dimensions of layers and regions are exaggerated for clarity of illustration. It will also be understood that when a layer is referred to as being "on" another layer or substrate, it can be directly on the other layer or substrate, or intervening layers may also be present. Further, it will be understood that when an element, is referred to as being "under" another element, it can be directly under the other element, and one or more intervening element(s) may also be present. In addition, it will also be understood that when an element is referred to as being "between" two elements it can be the only layer between the two elements, or one or more intervening elements may also be present. Like reference numerals refer to like elements throughout.

In the following description of exemplary embodiments of one or more aspects of the invention, a mobile phone may be used as an exemplary portable communication device. Aspects of the invention are not, however, limited to mobile phones.

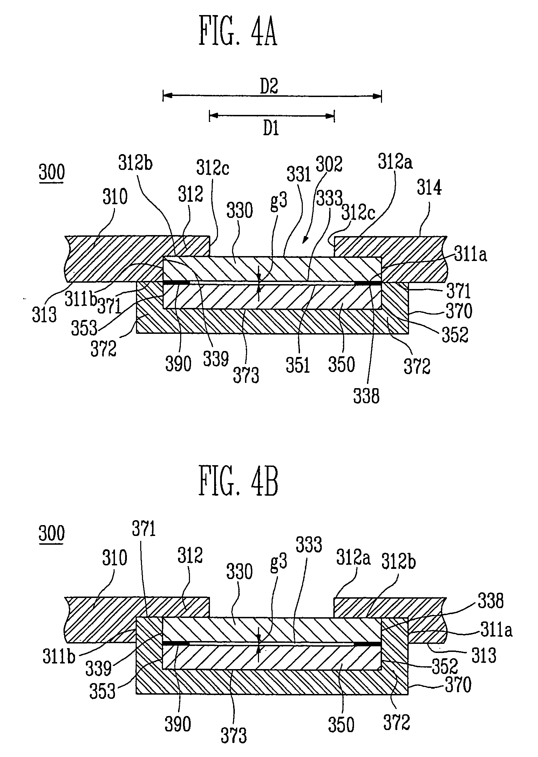

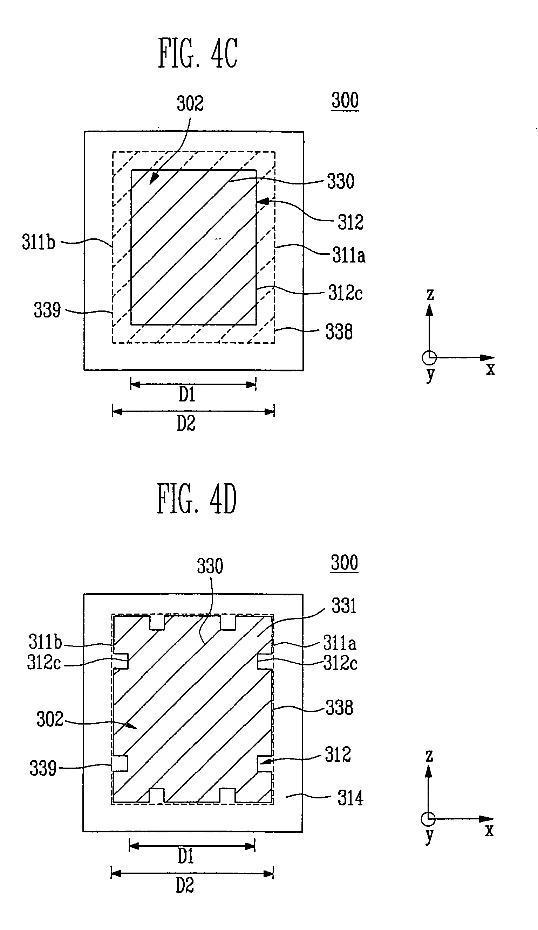

FIG. 3 illustrates an external perspective view of an exemplary portable electronic device including a display window assembly according to one or more embodiments of the invention. FIGS. 4A and 4B illustrate cross-sectional views of a first and a second embodiment of a display window assembly taken along line II-II in a portable electronic device, such as the mobile phone illustrated in FIG. 3.

As illustrated in FIG. 3, the mobile phone 3 may include a display window assembly 300, an input unit 400 for inputting information and/or display signals to the mobile phone 3, and a control unit (not shown) for controlling, e.g., the input information and/or display signals.

Referring to FIG. 4A, the display window assembly 300 according to the first embodiment of the invention includes a gap g3 between a window 330 and a display device 350. The input unit 400 may be, e.g., a known input unit 400, and may include a keypad for manual entry of information by users, a sound-recognition unit, a receiving unit for communication signals, an incident light-recognition unit for a camera attached to the phone 3, and other members for generating input signals in general.

Also, a conventional control unit may be included in the phone 3 so that it can control the input signals of the input unit 400 and signals of the display device 350.

The phone 3 may have a shape, as illustrated in FIG. 3, and may have a shape corresponding to a shape of the display window assembly 300. A thickness t3 of the display window assembly 300 of the mobile phone 3 may be thinner than the thickness t1 of known phones 1 at least because of a reduced gap, e.g., reduced gap g3 between the window 330 and the display device 350 in the display window assembly 300.

As illustrated in FIG. 4A, a portable electronic device case 310 according to an embodiment of the invention includes a portion corresponding to a display window assembly 300. The display window assembly 300 according to the first embodiment of the invention includes a predetermined opening 302, engaging portion(s) 312, a window 330, i.e., a transparent member, a display device 350, a backlight unit (BLU) 370 and a connecting mechanism 390.

The predetermined opening 302 exposes at least a portion of the window 330 and the display device 350, which is arranged in the display window assembly portion 300 of the case 310. Images displayed on the display device 350 are displayed via the predetermined opening 302 and the window 330.

One or more engaging portion(s) 312, e.g., protruding portion(s), are provided to secure the window 330 to the case 310. The engaging portion(s) 312 respectively project from surfaces 311a, 311b of the case 310. In the embodiments illustrated in FIGS. 4A and 4B, the engaging portion 312 has an outer surface 312a, and the outer surface 312a continuously extends from an outer surface 314 of the case 310. Respective facing surfaces 312c of engaging portions 312, face each other, as illustrated in FIG. 4A. In the embodiments illustrated in FIGS. 4A and 4B, the facing surfaces 312c extend substantially perpendicular to a plane along which the window 330 extends. The facing surfaces 312c may in alternative embodiments of the invention, however, extend, e.g., at a diagonal towards the window 330.

In the embodiments illustrated in FIGS. 4A and 4B, the surfaces 311a, 311b of the case 310 extend substantially perpendicular to the plane along which the window 330 extends. The surfaces 311a, 311b may in alternative embodiments of the invention, however, extend, e.g., at a diagonal towards the window 330. In further embodiments of the invention, an outer surface 312a of the engaging portion(s) may form a stepped structure relative to the outer surface 314 of the case 310.

As illustrated in FIG. 4A, in the first embodiment of the invention the engaging portions 312 define a distance D₁ of the predetermined opening 302. The surfaces from which the engaging portions 312 project, are opposite facing surfaces 311a, 311b, and define a distance D₂. The distance D₂ substantially corresponds to a width or length of a portion of the window 330 and/or the display device 350 that is arranged in the case 310. In embodiments of the invention, material, e.g., protective or insulating material, may be arranged between the display device 350 and the case 310, between the window 330 and the case 310, between the display device 350 and the window 330, and between the display device 350 and both the window 330 and the case 310.

The connecting mechanism 390 may be an adhesive. The window 330 is arranged to overlap the display device 350 with the connecting mechanism 390 sandwiched therebetween. The connecting mechanism 390 attaches the window 330 to the display device 350. As illustrated in FIG. 4A, the connecting mechanism 390 is provided at outer-side/edge portions of the window 330 and/or the display device 350. In this embodiment of the invention, the connecting mechanism 390 is provided at outer-side/edge portions of the window 330 and/or the display device 350 that directly overlap with the engaging portions 312. The outer-side/edge portions of the window 330 or the display device 350 correspond to portions of the window 330 or the display device 350 close to the surfaces 311a, 311b of the case 310 at least partially defining the predetermined opening 302. The connecting mechanism 390 is provided on portions of respective facing surfaces 333, 351 of the window 330 and the display device 350.

When the window 330 is arranged in the display window assembly 300 of the case 310, portions of an outer surface 331 of the window 330 overlap and/or are engaged by the engaging portions 312 of the case 310. Inner surface 312b of each engaging portion 312 facing towards the window 330 directly contacts a respective portion of the outer surface 331 of the window 330.

The BLU 370 is arranged adjacent to one or more sides 352, 353 of the display device 350, other than a side of the display device 350 facing the window 330 and/or on which the connecting mechanism 390 is provided. The BLU 370 directly contacts the one or more sides 352, 353 of the display device 350. The BLU 370 projects light to the display device 350.

The display device 350 and the window 330 may completely or substantially completely occupy a space defined by respective surfaces of the case 310, the BLU 370, and the predetermined opening 302. Sides 372 of the BLU 370 have surfaces 371 that connect to the case 310 and may at least partially define the space for housing the display device 350 and the window 330. A distance along a y-direction between the inner surface 312b of the engaging portion 312 and an inner surface 373 of the BLU 370 substantially corresponds to a distance along the γ-direction of a corresponding portion of the display unit 350, the window 330 and the gap g3 or the connecting mechanism 390.

In the first embodiment of the invention, the surface 371 of the sides 372 of the BLU 370 connects to the inner surface 313 of the case 310, and the sides 372 overlap sides 352, 353 of the display device 350 and the connecting mechanism 390. In the second embodiment of the invention, illustrated in FIG. 4B, the surface 371 of the sides 372 of the BLU 370 directly connects to the inner surface 312b of the engaging portions 312, and the sides 372 of the BLU 370 overlap the sides 352 of the display device 350, the connecting mechanism 390 and sides 338, 339 of the window 330. Embodiments of the invention are not, however, limited to such structures for the BLU 370 and the case 310.

FIGS. 4C and 4D respectively illustrate top plan views of a first and a second embodiment of the engaging portion 312. In FIG. 4C, the engaging portion 312 is provided entirely along and defines the predetermined opening 302 having, a generally rectangular shape with flat sides. In alternative embodiments of the invention, the opening 302 is not limited to such a rectangular shape and may be, e.g., circular, elliptical, stepped, etc. In FIG. 4C, when viewing the display window assembly 300 from the top, the sides 338, 339 of the window 330 and surfaces 311a, 311b of the case 310 are covered by the engaging portion 312.

As illustrated in FIG. 4D, in the second embodiment of the invention, the engaging portion 312 includes a plurality of toothed or stepped portions. The engaging portion 312 defines an opening 302, having, e.g., a generally rectangular shape. In embodiments of the invention two, three, four, etc. engaging portions 312 may be provided and may define toothed surfaces that define the predetermined opening 302. In embodiments of the invention, pairs of engaging portions 312 may be provided and may be arranged opposite to each other on opposing sides 311 a, 311b of the case 310. As illustrated in FIG. 4D, when viewing the display window assembly 300 of the second embodiment of the invention from the top, the sides 338, 339 of the window 330 substantially align with surfaces 311 a, 311b of the case 310 with the engaging portion 312, including the plurality of toothed portions, protruding inward.

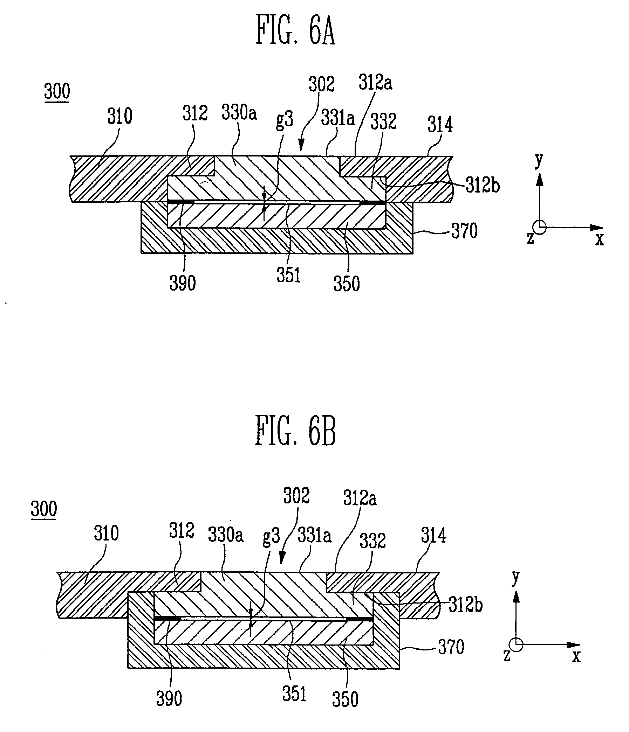

In embodiments of the invention, the surfaces 311a, 311b of the case 310 may include grooves (not shown) for receiving and engaging with portions of the window 330 to secure the window 330 in position. In further embodiments of the invention, multiple windows 330 may be provided. For example, one window 330 may be arranged on the outer surface 312a of the engaging portion(s) 312 and another window 330 may be arranged below the inner surface 312b of the engaging portion(s) 312. In embodiments in which a window 330 is arranged on the outer surface 312a, when the window 330 is arranged in the case 310, the outer surface 331 of the window may be arranged to be aligned with the outer surface 314 of the case 310, as illustrated in FIGS. 6A-6D and described below.

The window 330 is made of materials capable of transmitting light such that, e.g., display signals, emitted from a display device 350, may be transmitted through the window 330 and be observed by users from outside the case 310. In embodiments of the invention, the window may be made of a material capable of transmitting light having, e.g., a wavelength higher than the visible light wavelength.

The case 310 may be formed of a transparent material, an opaque material, or any combination thereof. For example, the engaging portions 312, which may overlap the display device 350, may be formed of a transparent material. Generally, the case 310 may be formed of a durable and light-weight material.

The display device 350 may be arranged inside of the case 310. The display device 350 may have a general shape and/or size along an x-z plane that corresponds to a general shape and/or size of the opening 302 along the x-z plane. In embodiments of the invention, the display device 350 may be a liquid crystal display (LCD), etc.

As illustrated in FIGS. 4A - 4D, in embodiments of the invention, at least along the x-z plane, the display device 350 and the window 330 have substantially or exactly the same shape and size.

As discussed above, a connecting mechanism 390, e.g., tape, is provided between the display device 350 and the window 330, to attach the display device 350 and the window 330 to each other. In embodiments of the invention, the gap g3 is defined by a thickness of the connecting mechanism 390.

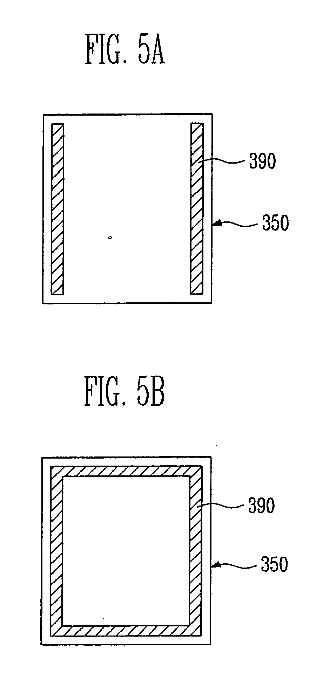

FIGS. 5A and 5B illustrate a plan view of embodiments of a connecting mechanism 390 employable with a display window assembly according to embodiments of the invention. As illustrated in FIG. 5A, a first embodiment of a connecting mechanism 390, e.g., tape, according to the invention, is provided between inner surface 333 of the window 330 and the outer surface 351 of the display device 350 and is formed to have a outer boundary than is within or exactly aligned within an outer boundary of the display unit 350 and/or the window 330. For example, the outer boundary of the connecting mechanism 390 may be within or completely aligned with a boundary defined by, e.g., sides 352, of the display device 350. Thus, in embodiments of the invention, the window 330 and/or the display device 350 may completely overlap and cover the connecting mechanism 390.

As illustrated in FIGS. 5A and 5B, the connecting mechanism 390 may have a shape that substantially corresponds to a general shape of the outer boundary of the window 330 and/or the display device 350. The connecting mechanism 390 may be a continuous strip of, e.g., a rectangular shaped adhesive tape, or may be a plurality of adhesive portions arranged at, e.g., opposing corners, sides, portions, etc. of the inner surface 333 of the window 330 and the outer surface 351 of the display device 350.

FIGS. 6A - 6D illustrate cross-sectional views of further embodiments of a display window assembly of a portable electronic device. Only differences between the exemplary embodiments described above with relation to FIGS. 4A and 4B and the exemplary embodiments illustrated in FIGS. 6A - 6D will be described below.

FIGS. 6A and 6B respectively correspond to the embodiments illustrated in FIGS. 4A and 4B, but with a window 330a. In the embodiments illustrated in FIGS. 4A and 4B, the outer surface 331 of the window 330 extends along a plane below the outer surfaces 312a and 314 of the engaging portion 312 and case 310, respectively. In the further embodiments, as illustrated in FIGS. 6A and 6B, a window 330a has an inverted-T-like cross-sectional shape such that an outer surface 331a is aligned with the outer surface 312a and 314 of the engaging portion 312 and the case 310, respectively. The window 330a includes one or more projecting portions 332 forming, e.g., the inverted T-like cross-sectional shape. In embodiments of the invention, the window 330a may have the shape that substantially fills a space defined by respective surfaces of the case 310, the BLU 370, the engaging members 312, the opening 302, and the outer surface 351 of the display device 350, excluding gap g3.

FIGS. 6C and 6D respectively correspond to the embodiments illustrated in FIGS. 6A and 6B, but with engaging portions 312' and window 330b. Only differences between the embodiments described above with relation to FIGS. 4A, 4B, 6A and 6B and the further embodiments illustrated in FIGS. 6C and 6D will be described below.

In the further embodiments, the case 310 has engaging portions 312' that may extend from an inner portion of the surfaces 311a, 311b of the case 310. In the embodiments illustrated in FIGS. 6C and 6D, rather than the outer surface 312a of the engaging portions 312' being aligned with the outer surface 314 of the case 310, inner surfaces 312b of the engaging portions 312' are aligned with the inner surface 313 of the case 310.

In the embodiments illustrated in FIGS. 6C and 6D, the window 330b has a substantially T-shaped cross-sectional shape, and includes one or more protruding portions 322. Outer surfaces 322a of the protruding portions 322 align with outer surfaces 314 of the case 310 and outer surface 331b of the window 330b. In the embodiment illustrated in FIG. 6D, the surfaces 371 of the BLU 370 connect to inner surfaces 322b of the protruding portions 322 of the window 330b. As illustrated in FIGS. 6C and 6D, the window 330b occupies a space defined by the case 310, the engaging portions 312', the outer surface 351 of the display device 350, excluding gap g3.

In the embodiments of the invention illustrated in FIGS. 6C and 6D, an outer side of the connecting mechanism 390 is not overlapped by the case 310 or the engaging member, and is only overlapped by the window 330b. In the embodiments of FIGS. 6A - 6D, a distance along the y direction of the case 310 may substantially correspond to a distance along the y direction of the window 330b.

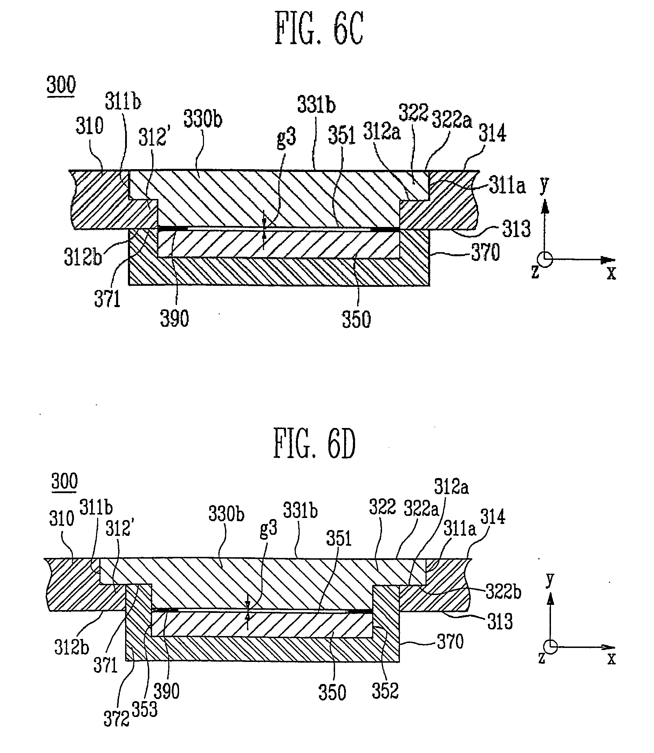

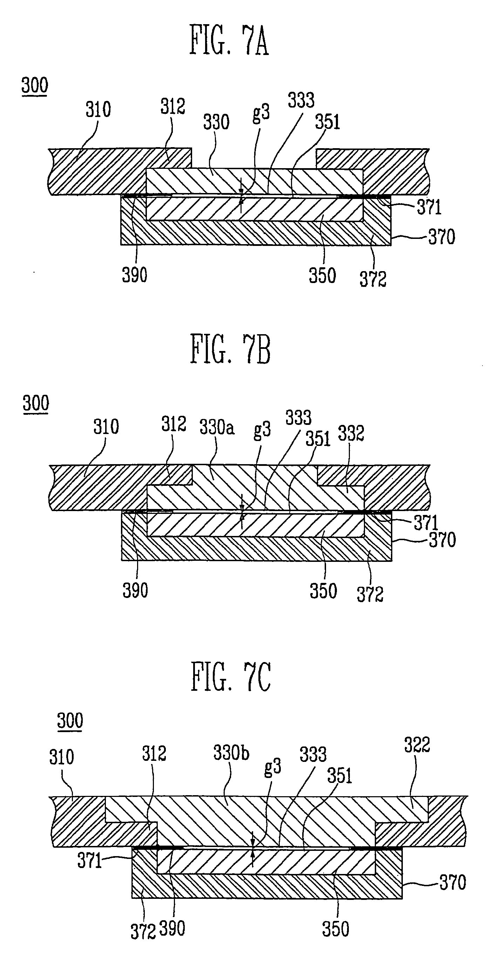

FIGS. 7A - 7C, illustrate cross-sectional views of embodiments of a display window assembly respectively illustrated in FIGS. 4A, 6A, and 6C, with another embodiment of a connecting mechanism. The connecting mechanism 390, e.g., tape, is provided between the outer surface 351 of the display device 350 and the inner surface 333 of the window 330, 330a or 330b and the surface 371 of the BLU 370. The connecting mechanism 390 may be integrally or separately formed so that the connecting mechanism 390 provided between the display device 350 and the window 330, 330a, 330b may be further extended between the BLU 370 and the case 310.

In the embodiments of the display window assemblies 300 described above, the display window assemblies 300 have a gap g3 between the window 330, 330a or 330b and the display device 350, and the gaps g3 may have a smaller value than the gap g1 of known display portions 100, as illustrated in FIG. 2. Therefore, it is possible to make the display window assemblies 300 thinner. Embodiments of the invention also enable display window assemblies 300 to be easily assembled while closely attaching the window 330, 330a, 330b and the display device 350 to each other using a connecting mechanism 390, e.g., tape. Embodiments of the invention provide, e.g., display window assemblies 300 that may be more easily assembled as compared to known display portions 100 at least because, e.g., an adhesion or connecting space may be easily secured, and a cost of the display window assembly may be reduced.

In the above description of embodiments with reference to FIGS. 3 - 7C, the display device 350 and the window 330 are illustrated as structures having rectangular or substantially rectangular cross-sectional shapes. Embodiments of the invention are not, however, limited to use with display devices and/or windows having such shapes. For example, a display device and/or a window employed with a case, according to one or more aspects of the invention, may have, e.g., a circular, elliptical, etc. cross-sectional shape. Embodiments of the invention are also not limited for use with a mobile phone, such as the mobile phone 3 illustrated in FIG. 3, and may be employed with a wide variety of electronic devices, including a wide variety of portable electronic devices.

Embodiments of the present invention have been disclosed herein, and although specific terms are employed, they are used and are to be interpreted in a generic and descriptive sense only and not for purpose of limitation. Accordingly, it will be understood by those of ordinary skill in the art that various changes in form and details may be made without departing from the scope of the present invention as set forth in the following claims.
As described above, according to the present invention, the display diode with a window assembly and the mobile phone having it may reduce the manufacturing cost since the final product becomes thinner, and is also easily assembled.

## Claims

1. A display window assembly, comprising:
a case having a first edge surface opposing a second edge surface and including at least one engaging portion and a predetermined opening, the predetermined opening being at least partially defined by the opposing edge surfaces of the case and the at least one engaging portion protruding from at least one of the opposing edge surfaces of the case;
a transparent member having a first surface opposing a second surface, and at least one of the first surface and the second surface of the transparent member contacting the engaging portion;
a display device including a first surface opposing a second surface;
a connecting mechanism between the second surface of the transparent member and the first surface of the display device for coupling the transparent member to the display device; and
a backlight unit (BLU) arranged on the second surface of the display device to project light to the display device.

2. A display window assembly as claimed in claim 1, wherein at least the first surface of the display device and the second surface of the transparent member have a substantially same size and shape.

3. A display window assembly as claimed in claim 2, wherein the BLU defines a space having a size and shape substantially corresponding to a size and shape of the second surface of the transparent member.

4. A display window assembly as claimed in any preceding claim, wherein the connecting mechanism is arranged at outer edge portions of the first surface of the display device and the second surface of the transparent member, and the connecting mechanism is completely overlapped by the first surface of the display device and the second surface of the transparent member.

5. A display window assembly as claimed in any one of claims 1 to 3, wherein the connecting mechanism is arranged between facing surfaces of the case and the BLU and between the outer edge portions of the first surface of the display device and the second surface of the transparent member, the connecting mechanism being in direct contact with the second surface of the transparent member, the case, the BLU and the first surface of the display device.

6. A display window assembly as claimed in any preceding claim, wherein the engaging portion has a first surface that is aligned with an outer surface of the case and a second surface that faces at least a portion of the first surface of the transparent member, the first surface of the engaging portion being opposed to the second surface of the engaging portion.

7. A display window assembly as claimed in claim 6, wherein the first surface of the transparent member has a first portion and a second portion, the first portion being aligned with the outer surface of the case and the second portion being overlapped by the second surface of the engaging portion.

8. A display window assembly as claimed in any of claims 1 to 5, wherein the engaging portion has a first surface that faces at least a portion of the second surface of the transparent member and a second surface opposing the first surface, wherein the first surface of the transparent member is substantially parallel with an outer surface of the case.

9. A display window assembly as claimed in any preceding claim, wherein the BLU includes side-wall portions and an inner-wall portion, the display device being sandwiched between the inner-wall portion of the BLU and the transparent member, and the side-wall portions extending substantially a distance corresponding to a thickness of the display device, and substantially perpendicular to a plane along which the inner-wall portion extends.

10. A display window assembly as claimed in claim 9, wherein the side-wall portions extend a distance greater than the thickness of the display device.

11. A display window assembly as claimed in any preceding claim, wherein the transparent member is made of a material that can transmit light having a wavelength greater than a wavelength of visible light.

12. A display window assembly as claimed in any preceding claim, wherein the display device is a display device for a liquid crystal display (LCD).

13. A display window assembly as claimed in any preceding claim, wherein the transparent member has at least one protruding portion.

14. A display window assembly as claimed in claim 13, wherein the at least one protruding portion of the transparent member and the at least one engaging portion of the case overlap one another.

15. A display window assembly as claimed in any preceding claim, wherein the transparent member and the display device have a substantially rectangular shape.

16. A display window assembly as claimed in claim 15, wherein the connecting mechanism has a substantially rectangular ring-like shape.

17. A display window assembly as claimed in any preceding claim, wherein the engaging portion includes a plurality of projecting portions.

18. A display window assembly as claimed in any preceding claim, wherein the connecting mechanism is an adhesive tape.

19. A display window assembly as claimed in any preceding claim, wherein a distance between the second surface of the transparent member and the first surface of the display device corresponds to a thickness of the connecting mechanism.

20. A portable electronic device comprising:
a display window assembly according to any preceding claim;
an input portion for inputting information to the display device; and
a control unit for controlling the input information.

21. A portable electronic device according to claim 20 wherein the portable electronic device is a mobile phone.
